(19) Europäisches Patentamt
European Patent Office
Office européen des brevets

(11) **EP 3 392 994 B1**

(12) **EUROPÄISCHE PATENTSCHRIFT**

(45) Veröffentlichungstag und Bekanntmachung des Hinweises auf die Patenterteilung:
**16.09.2020 Patentblatt 2020/38**

(51) Int Cl.:
***H02J 1/12*** *(2006.01)*

(21) Anmeldenummer: **17167094.6**

(22) Anmeldetag: **19.04.2017**

(54) **VERFAHREN ZUR LASTFLUSSREGELUNG IN EINEM GLEICHSPANNUNGSNETZ**

METHOD FOR LOAD FLOW REGULATION WITHIN A DIRECT CURRENT NETWORK

PROCÉDÉ DE RÉGULATION DE FLUX DE PUISSANCE DANS UN RÉSEAU DE TENSION CONTINUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**24.10.2018 Patentblatt 2018/43**

(73) Patentinhaber: **Siemens Aktiengesellschaft**
**80333 München (DE)**

(72) Erfinder:
 • **Döring, David**
 **91058 Erlangen (DE)**
 • **Ebner, Günter**
 **91239 Henfenfeld (DE)**
 • **Würflinger, Klaus**
 **90419 Nürnberg (DE)**
 • **Zeller, Marcus**
 **91056 Erlangen (DE)**

(56) Entgegenhaltungen:
EP-A1- 3 068 007 CN-A- 104 022 522
CN-A- 106 099 899 DE-A1-102014 225 675

 • **HAIFENG LI ET AL: "An Enhanced DC Voltage Droop-Control for the VSC--HVDC Grid", IEEE TRANSACTIONS ON POWER SYSTEMS., Bd. 32, Nr. 2, 1. März 2017 (2017-03-01), Seiten 1520-1527, XP055410250, US ISSN: 0885-8950, DOI: 10.1109/TPWRS.2016.2576901**

EP 3 392 994 B1

**Beschreibung**

Die Erfindung betrifft ein Verfahren zur Leistungsflussregelung in einem Gleichspanungsnetz mit wenigstens einem angeschlossenen Umrichter, bei dem zum Anpassen eines Sollwertes eines ersten Regelungsparameters des Umrichters in Abhängigkeit von einem weiteren Regelungsparameter des Umrichters eine Regelkennlinie mit einem vordefinierten Totbandbereich verwendet wird.

Neben einfachen Gleichspannungsnetzen in Form von Punkt-zu-Punkt-Verbindungen zwischen zwei Umrichtern stehen sogenannte Multiterminal-Gleichspannungsnetze mit mehr als zwei Umrichterstationen im besonderen Fokus der Entwicklung der Hochspannungsleichstromübertragung (HGÜ). Bei Multiterminal-Gleichspannungsnetzen ergeben sich deutlich mehr Variationen hinsichtlich der Übertragung der elektrischen Leistung. Dieser Umstand macht eine gezielte und autonome Regelung des Leistungsflusses im Multiterminal-Gleichspannungsnetz wünschenswert.

Ein Verfahren der eingangs genannten Art ist aus der EP 2 589 127 B1 bekannt. Dort sind mehrere Umrichter miteinander über ein Multiterminal-Gleichspannungsnetz verbunden. Den Umrichtern sind als Regelungsparameter ein Strom und eine Spannung zugeordnet. Für einen spannungsgeführten Umrichter wird dabei der Sollwert der Spannung in Abhängigkeit von dem gemessenen Strom im Gleichspannungsnetz angepasst. Diese Anpassung erfolgt mittels einer Regelkennlinie, die auch als Statik bezeichnet wird. Die bekannte Spannungs-Strom-Regelkennlinie weist einen stückweise linearen Verlauf auf. In einem inneren Bereich der Regelkennlinie ist ein Totband definiert, das sich zwischen zwei vordefinierten Stromgrenzwerten erstreckt. Innerhalb des Totbandes bleibt der Wert der Regelkennlinie bzw. der Spannung konstant. In einem Aussenbereich außerhalb des Totbandes ist der Verlauf der Regelkennlinie linear fallend, bis zu einem weiteren Grenzwert, an dem die Regelkennlinie einen senkrechten Verlauf annimmt und somit die Funktionseigenschaft verloren geht. Mittels des Totbandes kann beispielsweise erreicht werden, dass bei geringen Abweichungen des weiteren Regelungsparameters (beispielsweise Stromes) sich keine Änderung des Sollwertes des ersten Regelungsparameters (beispielsweise Spannung) ergibt.

Mit der Anpassung des Sollwertes der Regelungsparameter kann auf Veränderungen im Gleichspannungsnetz reagiert werden. Die Veränderungen können beispielsweise durch einen Ausfall eines Verbraucher oder Erzeugers elektrischer Leistung entstehen. Dabei kann es sich in diesem Sinne auch um den Ausfall eines Umrichters handeln.

Die Aufgabe der Erfindung ist es, ein artgemäßes Verfahren vorzuschlagen, das eine weiter verbesserte Regelung des Lastflusses im Gleichspannungsnetz ermöglicht.

Die Aufgabe wird bei einem artgemäßen Verfahren erfindungsgemäß dadurch gelöst, dass die verwendete Regelkennlinie im Totbandbereich eine nichtlineare und monoton steigende oder monoton fallende Funktion des weiteren Regelungsparameters ist. Demnach ist die Regelkennlinie keine lineare, insbesondere keine Funktion mit einem konstanten Funktionsgraphen. In dem Außenbereich außerhalb des Totbandbereiches kann die Regelkennlinie linear sein. In diesem Zusammenhang kann also von einem "weichen Totband" gesprochen werden. Das weiche Totband hat den Vorteil, dass es keine harte Sollwertbeschränkung auf einen konstanten Wert erzwingt. Auch der Übergang zwischen dem Bereich des Totbandes und dem Außenbereich außerhalb des Totbandbereiches kann "weich" gestaltet werden, so dass sprunghaftes oder gar oszillierendes Verhalten am Übergang vorteilhaft minimiert oder vermieden werden kann. Dies kann zweckmäßigerweise dadurch realisiert werden, dass die

Regelkennlinie an einem Übergang zwischen dem Bereich des Totbandes und einem Außenbereich außerhalb des Totbandbereiches glatt ist, so dass die Regelkennlinie an diesem Übergang, also insbesondere an den zwei Übergangsstellen an beiden Enden des Totbandbereiches, keine Sprünge, scharfe Kanten oder Knicke aufweist.

Im Sinne der Erfindung wird der Begriff "Totband" demnach erweitert. Das aus dem Stand der Technik bekannte Totband, das sich durch einen wertekonstanten Verlauf der Regelkennlinie auszeichnet, wird gemäß der Erfindung durch das "weiche Totband" ersetzt.

Eine besonders vorteilhafte Realisierung ergibt sich, wenn die Regelkennlinie im Bereich des Totbandes und am Übergang eine stetig differenzierbare Funktion ist. Die Regelkennlinie könnte beispielsweise einen polynomialen Verlauf im Totbandbereich haben, wobei der glatte oder differenzierbare Übergang zwischen Totbandbereich und Außenbereich durch entsprechende Randbedingungen definierbar ist.

In einem Gleichspannungsnetz, insbesondere einem Multiterminal-Gleichspannungsnetz mit mehreren Umrichtern, können den Umrichtern unterschiedliche Regelungsparameter zugewiesen werden. Beispielsweise kann einer der Umrichter leistungsgeregelt oder stromgeregelt sein, während die übrigen Umrichter spannungsgeregelt sind. Entsprechend können die Regelungen der Umrichter unterschiedliche Regelkennlinien aufweisen. Gemäß einer Ausführungsform der Erfindung ist die Regelkennlinie eine Leistungs-Spannungs-Kennlinie. Dies bedeutet, dass der erste Regelungsparameter die Ausgangsleistung des Umrichters, der weitere Regelungsparameters die DC-seitige Spannung am Umrichter sind. Ebenso ist es möglich, dass der erste Regelungsparameter die Spannung und der erste Regelungsparameter die DC-Ausgangsleistung sind.

Bevorzugt werden ein positiver und negativer Grenzwert des weiteren Regelungsparameters vorbestimmt, wobei sich das Totband bzw. der Totbandbereich zwischen dem positiven und dem negativen Grenzwert erstreckt, wobei die Grenzwerte in Abhängigkeit von Umrichterparametern vorbestimmt werden.

Gemäß einer Ausführungsform der Erfindung weist die Regelkennlinie einen streng monoton steigenden oder streng monoton fallenden Verlauf auf. Damit weist der Verlauf der Regelkennlinie im Bereich des Totbandes keine Steigung null auf. Sie kann aber Steigungen aufweisen, die nah bei null liegen, also relativ klein sind.

Vorzugsweise nimmt die Steigung der Regelkennlinie in einem Nullpunkt einen ersten Steigungswert an, während die Steigung der Regelkennlinie im Außenbereich außerhalb des Totbandes (des Totbandbereiches) einen zweiten Steigungswert annimmt, wobei das Verhältnis des zweiten Steigungswertes zu dem ersten Steigungswert größer als zehn ist. Damit kann vorteilhaft erreicht werden, dass eine bei größeren Abweichungen des weiteren Regelungsparameters ein automatischer und weicher Übergang zwischen einer Regelung mit nahezu konstantem Sollwert des ersten Regelungsparameters, beispielsweise Leistung, und einer Regelung mit nahezu konstantem Sollwert des weiteren Parameters, beispielsweise Spannung, erreicht wird. Das Verhältnis der beiden Steigungen kann zwischen 10 und 30, bevorzugt oberhalb von 30 liegen. Der Nullpunkt ist gekennzeichnet durch einen Wert null des ersten Regelungsparameters, wie beispielsweise in einem Ursprung eines entsprechenden Koordinatendiagramms.

Gemäß einer Ausführungsform der Erfindung wird eine zweistufige Sollwertnachführung durchgeführt. Dabei wird die Regelkennlinie in Abhängigkeit von Vorgaben eines zentralen Kontrolleinheit eines Gleichspannungsnetzes angepasst, das mit dem Umrichter verbunden ist, wobei das Anpassen eine lineare Transformation der Regelkennlinie umfasst. Die Referenzwerte der Regelkennlinie können dabei durch Verschieben entlang einer vorgegebenen linearen Kennlinie verändert werden. Diese zweite Anpassung kann insbesondere das zeitlich langfristige bzw. stationäre Verhalten des Umrichters bestimmen. Die erste Stufe der zweistufigen Sollwertanpassung wird gemäß der Regelkennlinie durchgeführt, wobei die zweite Stufe der Sollwertanpassung darin besteht, die Regelkennlinie selbst gemäß den Vorgaben der zentralen Kontrolleinheit angepasst wird. Die Vorgaben der zentralen Kontrolleinheit können beispielsweise durch einen Betreiber des Gleichspannungsnetzes bestimmt werden. Die zentrale Kontrolleinheit ist nicht Bestandteil des Umrichters, sondert stellt eine Übergeordnete Kontrollinstanz für das gesamte Gleichspannungsnetz dar.

Die Erfindung betrifft ferner einen Umrichter zum Umrichten eines elektrischen Stromes.

Die Aufgabe der Erfindung ist in diesem Zusammenhang, einen solchen Umrichter bereitzustellen, der besonders zuverlässig auf Zustandsänderungen in einem angeschlossenen Gleichspannungsnetz reagieren kann.

Die Aufgabe wird erfindungsgemäß durch einen Umrichter zum Umrichten eines elektrischen Stromes mit einer Gleichspannungsseite zum Verbinden mit einer Gleichspannungsleitung beziehungsweise einem Gleichspannungsnet, einer Wechselspannungsseite zum Verbinden mit einem Wechselspannungsnetz sowie einer Regelungseinrichtung zum Regeln des Umrichters gelöst, wobei die Regelungseinrichtung dazu eingerichtet ist, zum Anpassen eines ersten Regelungsparameters in Abhängigkeit von einem weiteren Regelungsparameter eine Regelkennlinie mit einem vordefinierten Totbandbereich zu verwenden, wobei die verwendete Regelkennlinie eine im Bereich des Totbandes nichtlineare und monoton steigende oder monoton fallende Funktion des weiteren Regelungsparameters ist.

Die Vorteile des erfindungsgemäßen Umrichters ergeben sich insbesondere aus den zuvor beschriebenen Vorteilen des erfindungsgemäßen Verfahrens. Alle im Zusammenhang mit dem erfindungsgemäßen Verfahren beschriebenen Merkmale können selbstverständlich auch im Zusammenhang mit dem erfindungsgemäßen Umrichter, allein oder in Kombination, verwendet werden.

Gemäß einer besonders bevorzugten Ausführungsform der Erfindung ist der Umrichter ein modularer Mehrstufenumrichter. Ein modularer Mehrstufenumrichter umfasst jeweils sich zwischen einem Gleichspannungspol und einem Wechselspannungsanschluss oder zwischen zwei Wechselspannungsanschlüssen erstreckende Umrichterarme. Jeder Umrichterarm weist eine Reihenschaltung mehrerer zweipoliger Schaltmodule auf. Jedes Schaltmodul umfasst einen Energiespeicher sowie eine Mehrzahl von Leistungshalbleiterschalteinheiten auf, die je einen ein- und ausschaltbaren, einzeln ansteuerbaren Halbleiterschalter aufweisen. In jedem der Schaltmodule müssen Ansteuerbaugruppen zur Ansteuerung der Halbleiterschalter und die Kommunikationsbaugruppen mit Energie versorgt werden. Ein solcher modularer Mehrstufenumrichter weist die vorteilhafte Eigenschaft auf, dass die mittels des modularen Mehrstufenumrichters eine mehrstufige Ausgangsspannung nahezu beliebiger Form erzeugt werden kann. Die Anzahl der erzeugbaren Stufen der Ausgangsspannung ist durch die Anzahl der Schaltmodule in den Umrichterarmen bestimmt. Ein weiterer Vorteil des modularen Mehrstufenumrichters ist, dass in einem Fehlerfall eines der Schaltmodule mittels einer Überbrückung dieses fehlerhaften Schaltmoduls die Betriebsfähigkeit des modularen Mehrstufenumrichters weiterhin sichergestellt werden kann. Die Halbleiterschalter der Schaltmodule können beispielsweise in einer dem Fachmann bekannten Form als Halbbrückenschaltung oder Vollbrückenschaltung miteinander verbunden sein.

Die Erfindung ist jedoch auch bei anderen Umrichtertopologien anwendbar, wie beispielsweise bei dem sogenannten Line Commutated Converter (LCC).

Die Erfindung soll im Folgenden anhand der in den Figuren 1 bis 3 dargestellten Ausführungsbeispiele weiter erläutert werden.

Figur 1 zeigt ein erstes Beispiel einer Regelkennlinie für ein erfindungsgemäßes Verfahren in einer schematischen Darstellung;

Figur 2 zeigt ein zweites Beispiel einer Regelkennlinie für ein erfindungsgemäßes Verfahren in einer schematischen Darstellung;

Figur 3 zeigt ein Multiterminal-System mit einem erfindungsgemäßen Umrichter in einer schematischen Darstellung.

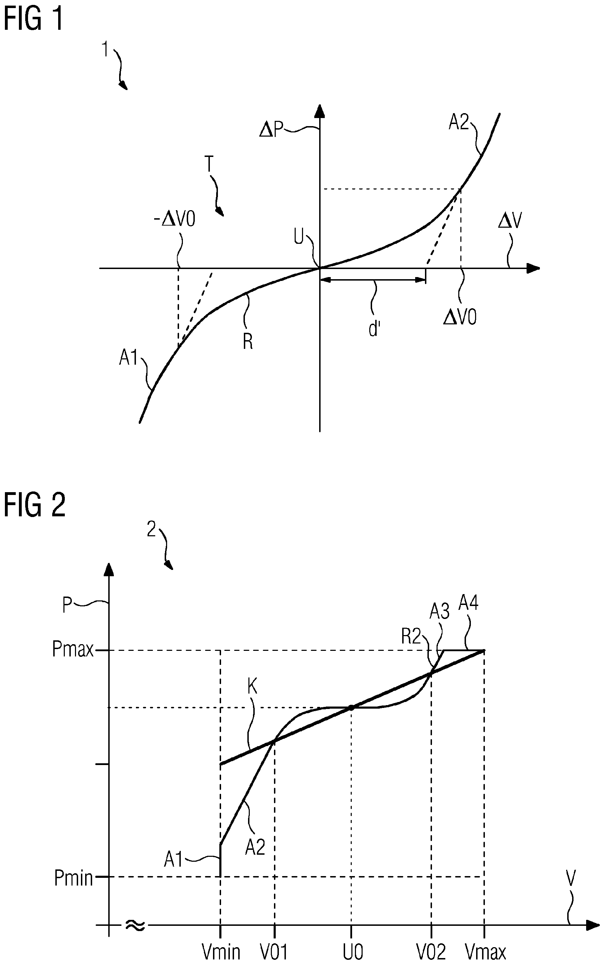

Im Einzelnen ist in Figur 1 ein Diagramm 1 dargestellt. Auf einer ersten Achse $\Delta P$ wird eine Differenz zwischen einem Sollwert und einem gemessenen Istwert einer gleichspannungsseitigen Ausgangsleistung an einem Umrichter aufgetragen. Auf einer zweiten Achse $\Delta V$ wird eine Differenz zwischen einem Sollwert und einem gemessenen Istwert einer gleichspannungsseitigen Ausgangsspannung an dem Umrichter aufgetragen.

Im vorliegenden Ausführungsbeispiel ist die Ausgangsleistung ein erster Regelungsparameter und die Ausgangsspannung ein weiterer Regelungsparameter. Anhand einer Regelkennlinie R wird der Sollwert der Ausgangsleistung in Abhängigkeit von der Ausgangsspannung beziehungsweise der Differenz $\Delta V$ angepasst. Dabei ist der Sollwert der Ausgangsleistung stets derart anzupassen, dass der Arbeitspunkt des Umrichters auf der Regelkennlinie liegt, $\Delta P = R(\Delta V)$.

Zwischen einem ersten Grenzwert $-\Delta V0$ und einem zweiten Grenzwert $\Delta V0$ ist ein Totband bzw. ein Totbandbereich T der Regelkennlinie definiert. Die Regelkennlinie R ist innerhalb des Totbandes T nichtlinear. In einem Außenbereich A1, A2 außerhalb des Totbandes T ist die Regelkennlinie R gemäß diesem Ausführungsbeispiel linear und streng monoton steigend.

Die Regelkennlinie R ist derart definiert, dass sie an den Übergängen $-\Delta V0$ und $\Delta V0$ glatt, im vorliegenden Beispiel sogar stetig differenzierbar ist. Die Definition der Regelkennlinie ist:

$$\Delta P = mo * (\Delta V - d) \qquad \text{für } \Delta V > \Delta V0;$$

$$\Delta P = a * \Delta V^3 + mi * \Delta V \quad \text{für } \Delta V > -\Delta V0,\ \Delta V > \Delta V0;$$

$$\Delta P = mo * (\Delta V + d) \qquad \text{für } \Delta V < -\Delta V0.$$

Der zusätzliche Parameter d ist derart gewählt, dass $d < |\Delta VO|$. Die weiteren Parameter a, mi und mo bestimmen die Steigungen der Regelkennlinie R. Die Parameter a, mi und mo werden derart bestimmt, dass die Regelkennlinie R auch am Übergang $\pm\Delta VO$ stetig differenzierbar ist.

In einem Ursprung U des Diagramms 1 weist die Regelkennlinie R einen ersten Steigungswert $s1 = mi$ auf. Im Außenbereich A1, A2 wiest die Regelkennlinie R einen zweiten Steigungswert $s2 = mo$ auf.

In Figur 2 ist ein zweites Beispiel einer Regelkennlinie R2 dargestellt. Die Regelkennlinie R2 ist in einem Diagramm 2 gezeigt, wobei eine erste Achse P des Diagramms eine gleichspannungsseitige Ausgangsleistung am Umrichter, eine zweite Achse V eine gleichspannungsseitige Ausgangsspannung am Umrichter zeigen.

Die Regelkennlinie R2 weist einen Totband auf, der sich zwischen einem ersten Grenzwert V01 und einem zweiten Grenzwert V02 erstreckt. Im Bereich des Totbandes ist die Regelkennlinie R2 nichtlinear, glatt und streng monoton steigend. An einem Arbeitspunkt U0 weist die Regelkennlinie R2 einen sehr kleinen Steigungswert auf, der in einer ersten Näherung null beträgt. In einem ersten Außenbereich A1 außerhalb des Totbandbereiches verläuft die Regelkennlinie im Diagramm 2 senkrecht, so dass die Spannung V konstant bleibt. In einem zweiten Außenbereich A2 und einem dritten Außenbereich A3 verläuft die Regelkennlinie R2 linear. In einem vierten Außenbereich A4 verläuft die Regelkennlinie R2 konstant in der Leistung P.

Es ist erkennbar, dass an den Übergängen V01 und V02 die Regelkennlinie R2 glatt ist, das heißt, dass sie dort keine Sprünge oder Knicke aufweist.

Eine lineare Kennlinie K ermöglicht eine langsame Nachführung der Regelkennlinie R2 nach Bedarf und gemäß einer sekundären, überlagerten Regelung, die beispielsweise durch einen Grid Controller erfolgt, der ein gesamtes Gleichspannungsnetz steuert, das mit dem Umrichter verbunden ist. Die Regelkennlinie R2 kann entlang der Kennlinie K linear transformiert, also verschoben werden.

Wie in Figur 2 angedeutet ist, wird die Regelkennlinie R2 durch die minimale/maximale Ausgangsleistung Pmin, Pmax sowie die minimale/maximale dauerhaft zulässige Spannung des Umrichters begrenzt, um eine Beschädigung des Umrichters zu verhindern.

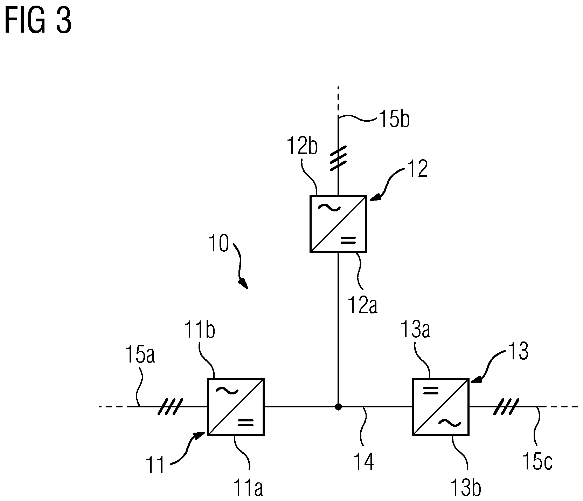

Figur 3 zeigt ein Gleichspannungsnetz in Form eines Multiterminal-Systems 10 von drei gleichspannungsseitig miteinander verbundenen Umrichtern 11, 12 und 13. Eine Leistungsflussregelung im Gleichspanungsnetz 10 erfolgt hierbei mit Hilfe von Regelkennlinien gemäß den Figuren 1 oder 2. Die Umrichter 11, 12, 13 weisen jeweils eine Gleichspannungsseite 11a, 12a bzw. 13a zum Verbinden mit einer Gleichspannungsleitung 14 des Gleichspannungsnetzes auf, sowie eine Wechselspannungsseite 11b, 12b, 13b zum Verbinden mit einem Wechselspannungsnetz 15a-c. Die Umrichter 11-13 umfassen ferner eine Regelungseinrichtung zum Regeln des Umrichters, wobei die Regelungseinrichtung dazu eingerichtet ist, zum Anpassen eines ersten Regelungsparameters (der Leistung oder Spannung sein kann) in Abhängigkeit von einem weiteren Regelungsparameter (der entsprechend Spannung oder Leistung ist) die Regelkennlinie R, R2 der Figuren 1 oder 2 zu verwenden. Die Umrichter 11, 12 und 13 sind jeweils modulare Mehrstufenumrichter.

**Patentansprüche**

1. Verfahren zur Leistungsflussregelung in einem Gleichspanungsnetz mit wenigstens einem angeschlossenen Umrichter (11), bei dem zum Anpassen eines Sollwertes eines ersten Regelungsparameters (P, $\Delta$P) des Umrichters in Abhängigkeit von einem weiteren Regelungsparameter (V, $\Delta$V) des Umrichters (11) eine Regelkennlinie (R) mit einem vordefinierten Totbandbereich verwendet wird,
**dadurch gekennzeichnet, dass**
die verwendete Regelkennlinie (R) im Totbandbereich (T) eine nichtlineare, monoton steigende oder monoton fallende Funktion des weiteren Regelungsparameters ist.

2. Verfahren nach Anspruch 1, wobei die Regelkennlinie (R) an einem Übergang zwischen dem Bereich des Totbandes (T) und einem Außenbereich (A1, A2) außerhalb des Totbandbandbereiches (T) glatt ist.

3. Verfahren nach Anspruch 2, wobei die Regelkennlinie (R) im Totbandbereich (T) und am Übergang zum Außenbereich eine stetig differenzierbare Funktion ist.

4. Verfahren nach einem der vorangehenden Ansprüche, wobei die Regelkennlinie (R) eine Leistungs-Spannungs-Kennlinie oder eine Strom-Spannungskennlinie ist.

5. Verfahren nach einem der vorangehenden Ansprüche, wobei ein positiver und negativer Grenzwert (-$\Delta$VO, $\Delta$VO) des weiteren Regelungsparameters vorbestimmt werden, wobei sich der Totbandbereich (T) zwischen dem positiven und dem negativen Grenzwert (-$\Delta$VO, $\Delta$VO) erstreckt, wobei die Grenzwerte(-$\Delta$VO, $\Delta$VO) in Abhängigkeit von Umrichterparametern vorbestimmt werden.

6. Verfahren nach einem der vorangehenden Ansprüche, wobei die Regelkennlinie (R) einen streng monoton steigenden oder streng monoton fallenden Verlauf aufweist.

7. Verfahren nach einem der vorangehenden Ansprüche, wobei die Steigung der Regelkennlinie (R) in einem Nullpunkt einen ersten Steigungswert annimmt, und die Steigung der Regelkennlinie (R) im Außenbereich (A1, A2) außerhalb des Totbandbereiches (T) einen zweiten Steigungswert annimmt, wobei das Verhältnis des zweiten Steigungswertes zu dem ersten Steigungswert größer als zehn ist.

8. Verfahren nach einem der vorangehenden Ansprüche, wobei die Regelkennlinie (R) in Abhängigkeit von Vorgaben eines zentralen Kontrolleinheit eines Gleichspannungsnetzes angepasst wird, das mit dem Umrichter verbunden ist, wobei das Anpassen eine lineare Transformation der Regelkennlinie (R) umfasst.

9. Umrichter (11) zum Umrichten eines elektrischen Stromes, mit einer Gleichspannungsseite (11a) zum Verbinden mit einer Gleichspannungsleitung (10), einer Wechselspannungsseite (116) zum Verbinden mit einem Wechselspannungsnetz (15a) sowie einer Regelungseinrichtung zum Regeln des Umrichters (11), wobei die Regelungseinrichtung dazu eingerichtet ist, zum Anpassen eines ersten Regelungsparameters (P, $\Delta$P) in Abhängigkeit von einem weiteren Regelungsparameter (V, $\Delta$V) eine Regelkennlinie (R) mit einem vordefinierten Totband (T) zu verwenden, wobei die verwendete Regelkennlinie eine im Bereich des Totbandes nichtlineare und monoton steigende oder monoton fallende Funktion des weiteren Regelungsparameters ($\Delta$V, V) ist.

10. Umrichter nach Anspruch 7, wobei der Umrichter (11-13) ein modularer Mehrstufenumrichter ist.

**Claims**

1. Method for controlling power flow in a DC voltage network having at least one connected converter (11), in which a control characteristic curve (R) having a predefined dead band region is used to adapt a desired value of a first control parameter (P, ∆P) of the converter on the basis of a further control parameter (V, ∆V) of the converter (11), **characterized in that** the control characteristic curve (R) used is a non-linear, monotonously rising or monotonously falling function of the further control parameter in the dead band region (T).

2. Method according to Claim 1, wherein the control characteristic curve (R) is smooth at a transition between the region of the dead band (T) and an outer region (A1, A2) outside the dead band region (T).

3. Method according to Claim 2, wherein the control characteristic curve (R) is a function which can be continuously differentiated in the dead band region (T) and at the transition to the outer region.

4. Method according to one of the preceding claims, wherein the control characteristic curve (R) is a power-voltage characteristic curve or a current-voltage characteristic curve.

5. Method according to one of the preceding claims, wherein a positive limit value and a negative limit value (-∆VO, ∆VO) of the further control parameter are predetermined, wherein the dead band region (T) extends between the positive and negative limit values (-∆VO, ∆VO), wherein the limit values (-∆VO, ∆VO) are predetermined on the basis of converter parameters.

6. Method according to one of the preceding claims, wherein the control characteristic curve (R) has a strictly monotonously rising or strictly monotonously falling profile.

7. Method according to one of the preceding claims, wherein the gradient of the control characteristic curve (R) assumes a first gradient value at a zero point, and the gradient of the control characteristic curve (R) assumes a second gradient value in the outer region (A1, A2) outside the dead band region (T), wherein the ratio of the second gradient value to the first gradient value is greater than ten.

8. Method according to one of the preceding claims, wherein the control characteristic curve (R) is adapted on the basis of specifications from a central control unit of a DC voltage network which is connected to the converter, wherein the adaptation comprises a linear transformation of the control characteristic curve (R).

9. Converter (11) for converting an electrical current, having a DC voltage side (11a) for connection to a DC voltage line (10), an AC voltage side (116) for connection to an AC voltage network (15a) and a control device for controlling the converter (11), wherein the control device is configured to use a control characteristic curve (R) having a predefined dead band (T) to adapt a first control parameter (P, ∆P) on the basis of a further control parameter (V, ∆V), wherein the control characteristic curve used is a non-linear and monotonously rising or monotonously falling function of the further control parameter (∆V, V) in the region of the dead band.

10. Converter according to Claim 7, wherein the converter (11-13) is a modular multilevel converter.

**Revendications**

1. Procédé de régulation du flux de puissance dans un réseau de tension continue, comprenant au moins un onduleur (11) raccordé, dans lequel, pour l'adaptation d'une valeur de consigne d'un premier paramètre (P, ∆P) de régulation de l'onduleur en fonction d'un autre paramètre (V, ∆V de régulation de l'onduleur (11), on utilise une courbe (R) caractéristique de régulation ayant une partie de bande morte définie à l'avance, **caractérisé en ce que** la courbe (R) caractéristique de régulation utilisée dans la partie (T) de bande morte est une fonction non linéaire croissant de manière monotone ou décroissant de manière monotone de l'autre paramètre de régulation.

2. Procédé suivant la revendication 1, dans lequel la courbe (R) caractéristique de régulation est lisse à une transition entre la partie de la bande (T) morte et une partie (A1, A2) extérieure à l'extérieur de la partie (T) de la bande morte.

**3.** Procédé suivant la revendication 2, dans lequel la courbe (R) caractéristique de régulation est, dans la partie (T) de la bande morte et à la transition avec la partie extérieure, une fonction différentiable de manière continue.

**4.** Procédé suivant l'une des revendications précédentes, dans lequel la courbe (R) caractéristique de régulation est une courbe caractéristique de puissance-tension ou une courbe caractéristique de courant-tension.

**5.** Procédé suivant l'une des revendications précédentes, dans lequel on détermine à l'avance une valeur (-$\Delta$VO, $\Delta$VO) limite positive et négative de l'autre paramètre de régulation, la partie (T) de bande morte s'étendant entre la valeur (-$\Delta$VO, $\Delta$VO) limite positive et négative, les valeurs (-$\Delta$VO, $\Delta$VO) limites étant déterminées à l'avance en fonction de paramètres de l'onduleur.

**6.** Procédé suivant l'une des revendications précédentes, dans lequel la courbe (R) caractéristique de régulation a un tracé croissant de manière strictement monotone ou décroissant de manière strictement monotone.

**7.** Procédé suivant l'une des revendications précédentes, dans lequel la pente de la courbe (R) caractéristique de régulation prend, à un point zéro, une première valeur de pente et la pente de la courbe (R) caractéristique de régulation, dans la partie (A1, A2) extérieure à l'extérieur de la partie (T) de la bande morte, prend une deuxième valeur de pente, le rapport de la deuxième valeur de pente à la première valeur de pente étant plus grand que dix.

**8.** Procédé suivant l'une des revendications précédentes, dans lequel la courbe (R) caractéristique de régulation est adaptée en fonction de prescriptions d'une unité centrale de commande d'un réseau de tension continue, qui est reliée à l'onduleur, l'adaptation comprenant une transformation linéaire de la courbe (R) caractéristique de régulation.

**9.** Onduleur (11) pour l'ondulation d'un courant électrique, comprenant un côté (11a) de tension continue à relier à une ligne (10) de tension continue, un côté (116) de tension alternative à relier à un réseau (15a) de tension alternative, ainsi qu'un dispositif de régulation pour réguler l'onduleur (11), le dispositif de régulation étant conçu en vue de l'adaptation d'un premier paramètre (P, $\Delta$P de régulation en fonction d'un autre paramètre (V, $\Delta$V de régulation pour utiliser une courbe (R) caractéristique de régulation ayant une bande (T) morte définie à l'avance, la courbe caractéristique de régulation utilisée étant une fonction de l'autre paramètre ($\Delta$V, V) de régulation, non linéaire et croissante de manière monotone ou décroissante de manière monotone dans la partie de la bande morte.

**10.** Onduleur suivant la revendication 7, dans lequel l'onduleur (11 à 13) est un onduleur modulaire à plusieurs étages.

FIG 1

FIG 2

# FIG 3

**IN DER BESCHREIBUNG AUFGEFÜHRTE DOKUMENTE**

**In der Beschreibung aufgeführte Patentdokumente**

- EP 2589127 B1